# FASCICULE DE BREVET EUROPEEN

(11) **EP 3 027 510 B1**
(45) Date de publication et mention de la délivrance du brevet: **21.11.2018**
(21) Numéro de dépôt: 14744869.0
(22) Date de dépôt: 31.07.2014
(51) Int. Cl.: B64G 1/64, F42B 15/38, F42B 15/36

(54) **PROCEDE ET DISPOSITIF DE LIAISON ET DE SEPARATION LINEAIRE DE DEUX ELEMENTS, AVEC MOYENS ENERGETIQUES DECALES**
VERFAHREN UND VORRICHTUNG ZUM LINEAREN VERBINDEN UND TRENNEN VON ZWEI ELEMENTEN MIT VERSETZTEN ENERGETISCHEN MITTELN
METHOD AND DEVICE FOR CONNECTING AND SEPARATING LINEARLY TWO ELEMENTS WITH SHIFTED ENERGETIC MEANS

(30) Priorité: 01.08.2013 FR 1357637
(43) Date de publication de la demande: 08.06.2016
(73) Titulaire: ArianeGroup SAS, 75015 Paris (FR)
(72) Inventeur: COMTESSE, Patrick, 11360 Fontjoncouse (FR); MEDINA, Felipe, 78170 La Celle Saint Cloud (FR); PREAUD, Luc, 78440 Gargenville (FR)
(74) Mandataire: Brevalex
(86) Numéro de dépôt international: PCT/EP2014/066504
(87) Numéro de publication internationale: WO 2015/014942

(56) Documents cités:
- WO-A2-2011/003965
- JP-A- 2002 211 500
- US-A- 4 648 227
- US-A- 5 402 728
- F. Z Smith: "Pyrotechnic shaped charge separation systems for aerospace vehicles", NASA Technical Memorandum NASA-TM X-1607, 1 juillet 1968 (1968-07-01), XP055118058, Washington, D.C., USA Extrait de l'Internet: URL:http://ntrs.nasa.gov/search.jsp?R=1968 0019397 [extrait le 2014-05-14]

## Description

### Domaine de l'invention

L'invention concerne une séparation linéaire, la plus douce possible, d'un premier élément par rapport à un second élément, qui sont au préalablement liés de façon rigide. L'invention s'applique, de préférence, aux lanceurs spatiaux, pour la séparation des étages entre eux, du lanceur et de sa coiffe ou d'un étage et de la charge utile, de missiles, de sondes spatiales, voire d'avions, dans le cas d'un largage de charge utile. Cette séparation a pour but de réduire la masse de l'ensemble embarqué, ou de larguer une charge utile. Ces applications se caractérisent par le fait qu'on a besoin de séparer des objets qui peuvent être fragiles, par exemple un satellite, et dont la liaison a eu à subir des charges mécaniques élevées, comme celles subies lors de la propulsion par un lanceur.

### Art antérieur et problème posé

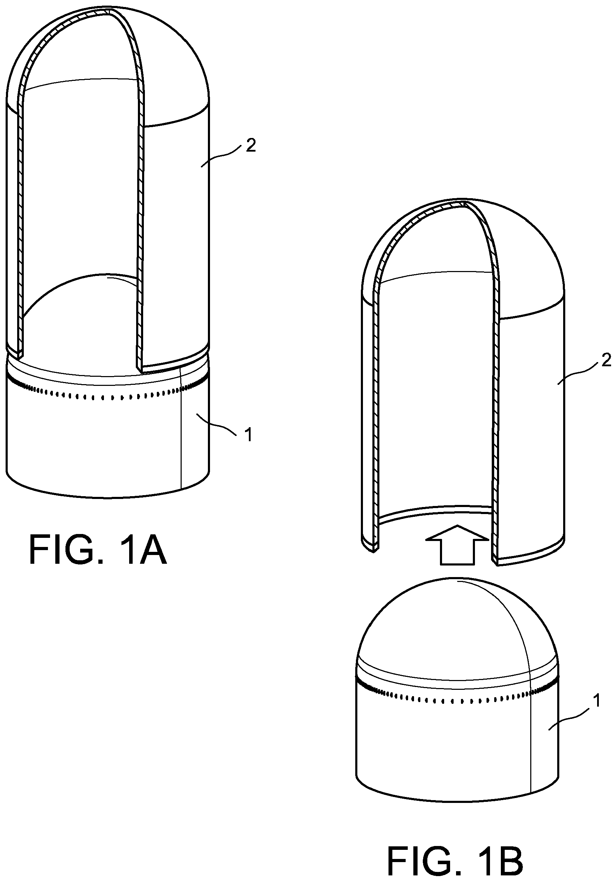

Les Figures 1A et 1B illustrent ce principe de séparation entre deux éléments 1 et 2 d'un lanceur. Le premier élément 1 est, de préférence, un élément de rang n, de préférence, un premier étage moteur. Le deuxième élément est un élément de rang n + 1, soit un deuxième élément moteur, soit une charge utile, par exemple un satellite. La séparation linéaire, dans l'axe du lanceur, doit donc être effectuée sans détérioration de la base du deuxième élément et, dans le cas où on désire récupérer le premier élément 1, sans détérioration de la surface de celui-ci, où se trouvait la liaison entre ces deux éléments 1 et 2.

Dans l'état actuel de la technique, le système de liaison-séparation est principalement de quatre types, qui sont les suivants :
1°) les liaisons par boulonnerie, rivetage et découpe pyrotechnique par pression et élévation de température locale de la structure. Ces systèmes, de par leur fonctionnement, engendrent des débris de matière éjectés. De plus, la découpe provoque un choc important dans la structure, ce qui peut être dommageable pour les charges utiles du lanceur ;
   Le document de brevet FR 2 947 808 montre un exemple de mise en oeuvre d'une telle solution.
2°) les liaisons par boulonnerie, rivetage et découpe pyrotechnique par rupture de la structure, par l'intermédiaire de la déformation d'un élément pyrotechnique. Cette solution est la plus employée et n'engendre pas de débris, mais provoque un choc très important ;
3°) les liaisons par boulonnerie pyrotechnique et rupture ou séparation de l'écrou. Ce type de solution engendre beaucoup moins de chocs que les deux précédentes, mais nécessite plusieurs boulons pour passer les efforts d'un élément à l'autre, engendrant donc des risques plus importants de défaillances du fait du nombre de dispositifs impliqués ;
4°) les liaisons par sangle et ruptures de celle-ci par boulons pyrotechniques. Ce type de solution ne permet pas de passer de gros efforts entre les deux éléments et n'autorise pas de diamètres trop importants pour les lanceurs. Dans ce cas également, le relâchement des contraintes provoque un choc important dans les structures.

De manière générale, dans l'état actuel de ces techniques, les systèmes dérivant de ces solutions de liaison-séparation ont la particularité de laisser, la plupart du temps, des aspérités sur la forme extérieure du lanceur, après la séparation.

Le but de l'invention est de remédier aux inconvénients susmentionnés.

D'autre part, on connaît par le document US 4 648 227 A une technique considérée comme l'art antérieur le plus proche.

### Objets de l'invention

A cet effet, un premier objet principal de l'invention est un procédé de liaison et de séparation linéaire de deux éléments liés linéairement l'un à l'autre, par une liaison locale définie, et devant être séparés de façon certaine, la séparation ayant lieu au niveau ou aux alentours de la liaison, cet échauffement étant déclenché à distance.

Selon l'invention, le procédé consiste :
- à lier les deux éléments au niveau de deux surfaces respectives correspondantes de ces deux éléments, par des moyens de liaison constitués de brasure placés entre deux surfaces de liaison respectives des deux éléments, une des deux surfaces de liaison étant une première surface de séparation d'une paroi de séparation présentant une deuxième surface de séparation, opposée à la première surface de séparation ;
- disposer sur la deuxième surface de séparation de la paroi de séparation du matériau de la thermite, amorçable par une liaison électrique de commande ;
- déclencher pyrotechniquement ladite thermite pour provoquer, par son seul échauffement, l'échauffement rapide, et non pas l'explosion, et la destruction des moyens de liaison.

Un deuxième objet principal de l'invention est un dispositif de liaison et de séparation linéaire de deux éléments liés linéairement l'un à l'autre par une liaison locale définie et devant être séparés de façon certaine, la séparation ayant lieu au niveau ou aux alentours de la liaison, l'échauffement étant déclenché à distance.

Selon l'invention, le dispositif comprend :
- des moyens de liaison constitués de brasure des deux éléments, ces moyens de liaison étant placés entre deux surfaces de liaison respectives des deux éléments, une des deux surfaces de liaison étant la première surface d'une paroi de séparation, qui présente une deuxième surface opposée à la première surface de séparation ;
- de la thermite, placée sur la deuxième surface de séparation ; et
- des moyens de déclenchement pyrotechnique à distance de la thermite.

Dans la réalisation préférentielle de l'invention, les deux surfaces de liaison sont des surfaces respectives des deux éléments, la paroi de séparation étant les parois d'un des deux éléments.

Dans ce cas, avantageusement, les deux surfaces de liaison sont coniques.

Les moyens de liaison sont réalisés par brasage.

De préférence, la paroi de séparation est celle de l'élément placé à l'extérieur de l'autre élément, le matériau étant placé dans une cavité externe de cette paroi de l'élément externe.

Un troisième objet de l'invention est un lanceur aéronautique comprenant au moins un étage porteur constitué par un premier élément et un étage porté par et fixé sur l'étage porteur et constitué par un deuxième élément, le lanceur étant caractérisé en ce qu'il comprend une pluralité de dispositifs décrits précédemment, répartis sur toute la périphérie du lanceur entre les deux étages pour les solidariser, puis les séparer.

### Liste des figures

L'invention et ses différentes caractéristiques seront mieux comprises à la lecture de la description suivante, accompagnée de plusieurs figures, représentant respectivement :
- Figures 1A et 1B, un schéma représentant la séparation de deux éléments d'un lanceur;
- Figure 2, en coupe, le principe du procédé selon l'invention ;
- Figure 3, en coupe, une réalisation du dispositif selon l'invention ;
- Figure 4, en vue cavalière, une certaine réalisation du dispositif selon l'invention ; et
- Figure 5, en coupe, un détail de réalisation du dispositif selon l'invention.

### Description détaillée d'une réalisation de l'invention

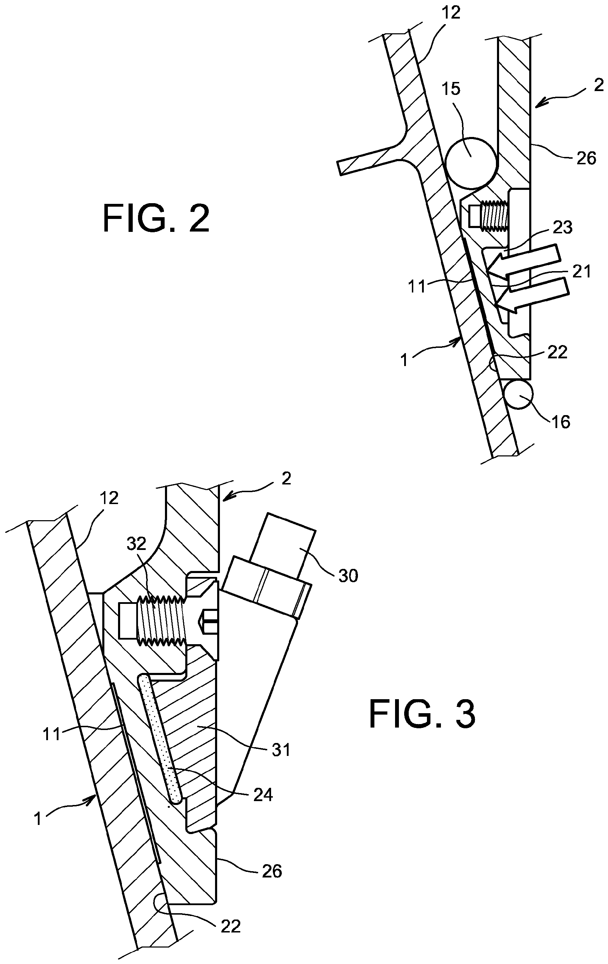

La Figure 2 montre un schéma du procédé et du dispositif selon l'invention, appliqué à deux éléments 1 et 2, qui sont, dans l'application préférentielle de l'invention, pour le premier élément 1, un lanceur aérospatial ou aéronautique de rang n, par exemple le premier étage d'un lanceur sur l'extrémité duquel est fixé le deuxième élément, qui est soit un deuxième lanceur de rang n+1, c'est-à-dire de préférence un deuxième étage de lanceur, soit une charge opérationnelle, par exemple contenant du matériel ou une installation à mettre sur orbite. L'extrémité avant du premier élément 1 est conique, c'est-à-dire que la paroi externe 12 de ce premier élément 1 est conique pour en faciliter la séparation, cette conicité étant optionnelle. En correspondance, l'extrémité arrière du deuxième élément 2 possède une paroi interne 22, qui est conique, de la même conicité que la paroi externe 12 du premier lanceur 1. L'interface entre ces deux surfaces, la surface externe 12 du premier lanceur 1 et la surface interne 22 du deuxième lanceur 2, comprend des moyens de liaison pour solidariser de façon ferme et fiable les éléments 1 et 2 entre eux. Ces moyens de liaison sont, de préférence, une brasure répartie sur toute la périphérie de ces deux surfaces. On précise que le ruban de brasure est placé dans un logement de la structure supérieure, c'est-à-dire du deuxième élément 2.

Pour réaliser l'immobilisation des deux éléments 1 et 2, ces derniers sont portés à la température de fusion de la brasure utilisée pour cet assemblage. Par exemple, si ces structures à assembler sont réalisées en titane et que la brasure choisie est un alliage d'argent, l'ensemble de la zone à assembler est portée à la température de fusion de l'alliage d'argent, soit environ 960°. Pour ce faire, on choisit plusieurs méthodes classiques, par exemple le brasage par induction, le brasage par chauffage au four, sous atmosphère neutre, ou le brasage par résistance. Pour l'assemblage concerné par la présente invention, on note que le brasage par induction, ou le brasage par résistance sont plus adaptés pour les grands volumes. Le brasage étant réalisé, les moyens de chauffage sont retirés et la liaison est alors fonctionnelle.

Pour réaliser la désolidarisation des deux éléments, c'est-à-dire le premier élément 1 et le deuxième élément 2, on introduit dans un logement 23 pratiqué dans la surface externe 26 du deuxième élément 2, sur une surface dite deuxième surface de séparation 21, en regard des moyens de liaison, des moyens de chauffage constitués par une couche de la thermite (définition de thermite : mélange d'un combustible métallique pouvant souvent être l'aluminium, mais pas uniquement, et d'un oxydant, souvant un oxydant métallique). On précise ici que le terme thermite englobe les nanothermites. La première surface de séparation est constituée par la surface de liaison 22 du deuxième élément 2. La paroi du deuxième élément 2 devient ici une suface de séparation. Par des moyens de déclenchement à distance, l'échauffement rapide de ce matériau est déclenché au moment où on désire désolidariser le premier élément 1 du second élément 2. De ce fait, les moyens de liaison 11, à savoir de la brasure, fondent et les deux éléments, c'est-à-dire le premier élément et le second élément, se séparent.

Les matériaux utilisés pour constituer cette thermite pouvant être de la thermite gainée. Ce type de matériau, par réaction d'oxydoréduction exothermique, produit des températures de l'ordre de 2800°, de 1 230°C à 5 770°K, en incluant les nanothermites. On précise que les moyens de liaison sont ainsi placés autour de l'ensemble de la liaison, c'est-à-dire sur la périphérie de l'ensemble du premier élément 1 et du second élément 2.

La liaison représentée est avantageusement complétée d'un premier joint intérieur 15, placé entre le premier élément et le second élément et un deuxième joint externe 16, placé entre le premier élément et le second élément, mais à l'extérieur de l'ensemble.

La Figure 3 reprend en coupe le même endroit, concerné par la présente invention. Toutefois, des moyens de déclenchement ont été représentés. Ils sont constitués ici d'un allumeur 30 du type utilisé par les équipements pyrotechniques. Il est placé à l'extérieur du deuxième élément, en saillie de la surface externe 26 du deuxième élément 2. Une contreplaque 31, faite de plusieurs éléments, fait la liaison entre cet allumeur 30 et les moyens de chauffage, constitués ici d'un ruban de thermite 24. La fixation de l'allumeur sur le deuxième élément peut être réalisée au moyen d'un système vis-écrou 32, rapporté dans l'épaisseur du deuxième élément 2.

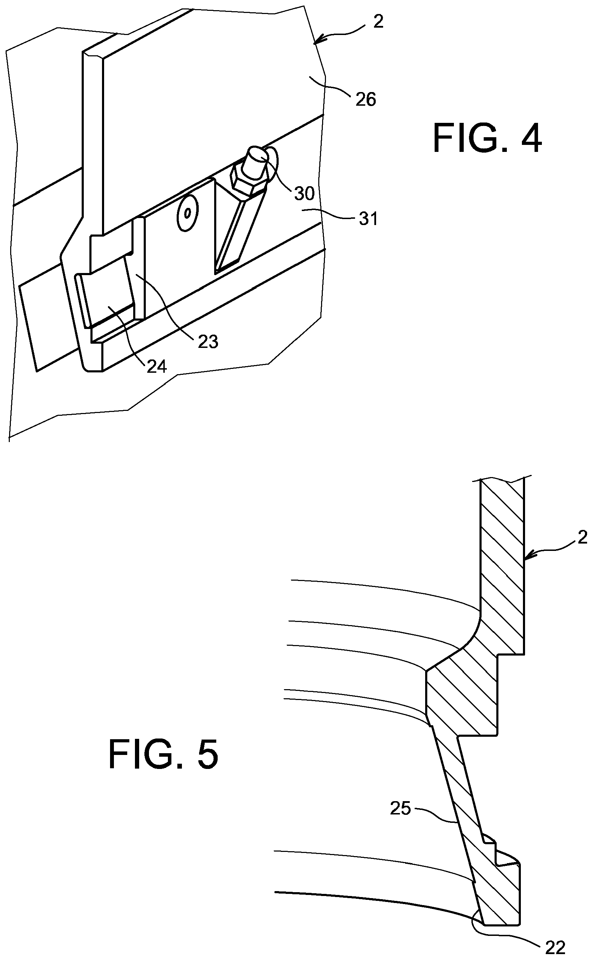

La Figure 4 montre cet allumeur 30, vissé sur la surface externe 26 du deuxième élément 2. Il peut également se trouver à l'intérieur. Si une pluralité d'allumeurs 30 est ainsi nécessaire, tout autour de la périphérie de l'ensemble, un même nombre de contreplaques 31 est utilisé pour faire la jonction entre le ruban de thermite 24 et les allumeurs 30. Elle comble le logement 23, pratiqué sur toute la circonférence de la surface externe 26 du deuxième élément 2. Ces allumeurs 30 vont donc provoquer l'allumage instantané du ruban de thermite 24, ou du matériau équivalent, s'il y a lieu. La température générée dans l'ensemble de la jonction, est réglée par la quantité de matériau constituant la thermite, et de l'environnement métallique de l'ensemble. L'émission de chaleur se diffuse dans la structure, au niveau de la liaison, qui transmet elle-même cette chaleur à la brasure. Cette dernière va passer par sa température de fusion et la désolidarisation du premier élément du deuxième élément aura donc lieu.

En regard de la Figure 5, on peut pratiquer un logement 25 dans lequel sont placés les moyens de liaison, tels que la brasure. Il s'agit d'une cavité peut profonde, faisant le tour de la périphérie de la surface intérieure 22 du deuxième élément 2.

Dans le cas de deux éléments d'un lanceur aérospatial, les premier élément 1 et deuxième élément 2 sont intentionnellement sous pression. De ce fait, ils vont s'éloigner l'un de l'autre, sous l'effet de bouchon de champagne, selon l'axe linéaire de l'ensemble. Dans le cas où il n'y a pas de pression à l'intérieur des deux éléments, ou entre les structures, l'éloignement peut se faire par tout autre moyen connu, tel que des ressorts, des fusées d'éloignement, des moyens pneumatiques ou autres.

Après la désolidarisation du premier élément et du deuxième élément, la structure intérieure du deuxième élément retrouve une surface sans protubérance, ni arrachement.

De plus, l'invention répond à une disposition de l'Article 5 de la Loi relative aux Opérations Spatiale (LOS), relative aux Opérateurs de lancement de satellites, afin d'assurer la protection de l'environnement de l'espace extra-atmosphérique, notamment en vue de limiter les risques liés aux débris spatiaux.

## Revendications

1. Procédé de liaison et de séparation linéaire de deux éléments, un premier élément (1) et un deuxième élément (2) liés linéairement l'un à l'autre, au moyen d'une liaison locale définie et devant être séparés de façon certaine, la séparation ayant lieu au niveau ou à l'entour de la liaison, un échauffement étant déclenché à distance, le procédé comprenant les étapes suivantes :
- lier les deux éléments au niveau de deux surfaces de liaison (12, 22), respectives et correspondantes du premier élément (1) et du deuxième élément (2), avec des moyens de liaison (11) constitués de brasure et placés entre ces deux surfaces de liaison (12, 22), une des deux surfaces de liaison (22) étant une première surface d'une paroi de séparation présentant une deuxième surface dite de séparation (21), opposée à la première surface (11) ;
- disposer sur cette deuxième surface de séparation (21) de la thermite (24), amorçable par une liaison électrique de commande ; et
- déclencher pyrotechniquement ladite thermique (24) pour provoquer, par son seul échauffement, l'échauffement rapide et la destruction des moyens de liaison (11).

2. Dispositif de liaison et de séparation linéaire de deux éléments, le dispositif comprenant ces deux éléments, un premier élément (1) et un deuxième élément (2), linéairement liés l'un à l'autre par une liaison locale définie et devant être séparés de façon certaine, la séparation ayant lieu au niveau ou alentour de la liaison, un échauffement étant déclenché à distance, le dispositif comprenant:
- des moyens de liaison (11) des deux éléments, à savoir le premier élément (1) et le deuxième élément (2), ces moyens étant placés entre deux surfaces de liaison (12, 22) respectives du premier élément (1) et du deuxième élément (2), une des deux surfaces de liaison (22) étant une première surface d'une paroi de séparation présentant une deuxième surface (21) opposée à la première surface (22) ; ; et
- des moyens de déclenchement pyrotechnique à distance; **caractérisé en ce que**
- les moyens de liaison (11) sont constitués de brasure; **en ce que**
- le dispositif comprend de la thermite (24) placée sur la deuxième surface (21) de la paroi de séparation; et **en ce que**
- les moyens de déclenchement pyrotechnique à distance sont des moyens de déclenchement pyrotechnique à distance de la thermite.

3. Dispositif selon la revendication 2, **caractérisé en ce que** les deux surfaces de liaison (12, 22) sont des surfaces respectives des deux éléments, c'est-à-dire le premier élément (1) et le deuxième élément (2), la paroi de séparation étant la paroi d'un des deux éléments.

4. Dispositif selon la revendication 3, **caractérisé en ce que** la paroi de séparation est celle de l'élément placé à l'extérieur de l'autre élément, le matériau (24) étant placé dans un logement (23) pratiqué sur la paroi de l'élément externe (2).

5. Lanceur aéronautique comprenant au moins un étage porteur constitué par un premier élément (1) et un étage porté par et fixé sur l'étage porteur et constitué par un deuxième élément (2), le lanceur étant **caractérisé en ce qu'**il comprend une pluralité de dispositifs selon l'une des revendications 2 à 4, répartis sur toute la périphérie du lanceur entre les deux étages pour les solidariser, puis les séparer, les deux surfaces de liaison (12, 22) étant coniques.

## Patentansprüche

1. Verfahren zum linearen Verbinden und Trennen von zwei Elementen, einem ersten Element (1) und einem zweiten Element (2), die über eine definierte lokale Verbindung linear miteinander verbunden sind und zuverlässig getrennt werden müssen, wobei die Trennung an oder um die Verbindung herum erfolgt, eine Erwärmung fernausgelöst wird und das Verfahren die folgenden Schritte umfasst:
- Verbinden der beiden Elemente an zwei jeweils dem ersten Element (1) und dem zweiten Element (2) entsprechenden Verbindungsflächen (12, 22) mit Verbindungsmitteln (11) aus Lot, die zwischen diesen beiden Verbindungsflächen (12, 22) angeordnet sind, wobei eine der beiden Verbindungsflächen (22) eine erste Fläche einer Trennwand mit einer zweiten sogenannten Trennfläche (21) gegenüber der ersten Fläche (11) ist;
- Platzieren von Thermit (24), das durch eine elektrische Steuerverbindung zündbar ist, auf dieser zweiten Trennfläche (21); und
- pyrotechnisches Auslösen der Wärme (24), um allein durch ihre Erwärmung eine schnelle Erwärmung und Zerstörung der Verbindungsmittel (11) zu bewirken.

2. Vorrichtung zum linearen Verbinden und Trennen von zwei Elementen, wobei die Vorrichtung diese beiden Elemente, ein erstes Element (1) und ein zweites Element (2) umfasst, die über eine definierte lokale Verbindung linear miteinander verbunden sind und zuverlässig getrennt werden müssen, wobei die Trennung an oder um die Verbindung herum erfolgt, eine Erwärmung fernausgelöst wird und die Vorrichtung umfasst:
- Verbindungsmittel (11) der beiden Elemente, nämlich des ersten Elements (1) und des zweiten Elements (2), wobei diese Mittel zwischen zwei jeweiligen Verbindungsflächen (12, 22) des ersten Elements (1) und des zweiten Elements (2) angeordnet sind, wobei eine der beiden Verbindungsflächen (22) eine erste Fläche einer Trennwand mit einer zweiten Fläche (21) gegenüber der ersten Fläche (22) ist;
- pyrotechnische Fernauslösemittel;
**dadurch gekennzeichnet, dass**
- die Verbindungsmittel (11) aus Lot bestehen; dass
- die Vorrichtung Thermit (24) umfasst, das auf der zweiten Fläche (21) der Trennwand angeordnet ist; und dass
- es sich bei den pyrotechnischen Fernauslösemitteln um pyrotechnische Fernauslösemittel des Thermits handelt.

3. Vorrichtung nach Anspruch 2, **dadurch gekennzeichnet, dass** es sich bei den beiden Verbindungsflächen (12, 22) um entsprechende Flächen der beiden Elemente handelt, d. h. des ersten Elements (1) und des zweiten Elements (2), wobei die Trennwand die Wand eines der beiden Elemente darstellt.

4. Vorrichtung nach Anspruch 3, **dadurch gekennzeichnet, dass** es sich bei der Trennwand um diejenige des Elements handelt, das außerhalb des anderen Elements angeordnet ist, wobei das Material (24) in einem Gehäuse (23) untergebracht ist, das an der Wand des äußeren Elements (2) vorgesehen ist.

5. Flugstarter, umfassend mindestens eine Trägerstufe, die aus einem ersten Element (1) besteht, und eine Stufe, die von der Trägerstufe getragen und auf dieser befestigt ist und aus einem zweiten Element (2) besteht, wobei der Starter **dadurch gekennzeichnet ist, dass** er eine Mehrzahl von Vorrichtungen nach einem der Ansprüche 2 bis 4 umfasst, die über den gesamten Umfang des Starters zwischen den beiden Stufen verteilt sind, um sie zu befestigen und dann voneinander zu trennen, wobei die beiden Verbindungsflächen (12, 22) konisch ausgebildet sind.

## Claims

1. A method for linearly connecting and separating two elements, a first element (1) and a second element (2) linearly attached to each other by means of a defined local connection and that have to be securely separated, the separation occurring at or near the connection, a warming-up being remotely triggered, the device comprising the following steps of:
- connecting both elements at two respective and corresponding connecting surfaces (12, 22) of the first (1) and the second element (2), with connecting means (11) made of solder and placed between both these connecting surfaces (12, 22), one of both connecting surfaces (22) being a first surface of a first separating wall having a so-called second separating surface (21), opposite to the first surface (11);
- providing, on this second separating surface (21), thermite (24), inflammable by an electrical control connection; and
- pyrotechnically triggering said thermite (24) to cause, only by its warming-up, the quick warming-up and destruction of the connecting means (11).

2. A device for connecting and linearly separating two elements, the device comprising these two elements, a first element (1) and a second element (2) linearly connected to each other by a defined local connection and that have to be securely separated, the separation occurring at or near the connection, a warming-up being remotely triggered, the device comprising :
- means for connecting (11) both elements, that is the first element (1) and the second element (2), these means being placed between two respective connecting surfaces (12, 22) of the first element (1) and the second element (2), one of both connecting surfaces (22) being a first surface of a separating wall having a second surface (21) opposite to the first surface (22); and
- means for remotely pyrotechnically triggering; **characterised in that**
- the connecting means (11) made of solder; **in that**
- the device comprises thermite (24) placed on the second surface (21) of the separating wall; and **in that**
- the means for remotely pyrotechnically triggering are means means for remotely pyrotechnically triggering the thermite.

3. The device according to claim 2, **characterised in that** both connecting surfaces (12, 22) are respective surfaces of both elements, that is the first element (1) and the second element (2), the separating wall being the wall of one of both elements.

4. The device according to claim 3, **characterised in that** the separating wall is that of the element placed outside the other element, the material (24) being placed in a housing (23) provided on the wall of the outer element (2).

5. An aeronautic launcher comprising at least one carrier stage consisting of a first element (1) and a stage carried by and attached on the carrier stage and consisting of a second element (2), the launcher being **characterised in that** it comprises a plurality of devices according to one of claims 2 to 4, distributed over the entire circumference of the launcher, between both stages, to secure them, and then separate them, both connecting surfaces (12, 22) being conical.
